# FASCICULE DE BREVET EUROPEEN

(11) **EP 1 326 792 B1**
(45) Date de publication et mention de la délivrance du brevet: **15.12.2004**
(21) Numéro de dépôt: 01976437.2
(22) Date de dépôt: 15.10.2001
(51) Int. Cl.: B65G 17/06

(54) **MODULE POUR LA REALISATION D'UNE BANDE TRANSPORTEUSE**
MODUL ZUR HERSTELLUNG EINES FÖRDERBANDES
MODULE FOR PRODUCING A CONVEYOR BELT

(30) Priorité: 16.10.2000 FR 0013221
(43) Date de publication de la demande: 16.07.2003
(73) Titulaire: Tissmetal, S.A., F-51100 Reims (FR)
(72) Inventeur: GRISLAIN, Benoît, F-51500 Taissy (FR); MAHIEU, Pierre, F-02190 Prouvais (FR); CAILLIERET, Gérard, F-51430 Bezannes (FR)
(74) Mandataire: Hennion, Jean-Claude
(86) Numéro de dépôt international: PCT/FR2001/003187
(87) Numéro de publication internationale: WO 2002/032791

(56) Documents cités:
- NL-C- 1 005 979

## Description

L'invention se rapporte à un module pour la réalisation, par assemblage de modules, d'une bande transporteuse.

Elle se rapporte également à la bande transporteuse obtenue.

Une bande transporteuse est constituée soit d'une nappe de matériau dont les deux extrémités sont raccordées sur elles-mêmes pour former une boucle, soit d'un assemblage de pièces unitaires ou modules articulés les uns aux autres.

L'invention se rapporte aux bandes transporteuses constituées de modules articulés entre eux.

Ces modules comprennent donc chacun une surface portante de forme globalement rectangulaire dont les grands côtés sont en règle générale perpendiculaires au sens de déplacement de la bande transporteuse et qui sont donc pourvus sur ces grands côtés d'une fraction d'un moyen d'articulation.

Pour constituer cette surface portante, il est connu d'utiliser une pluralité de fils métalliques comprenant à chaque extrémité une boucle pour former un ensemble couramment appelé dans la profession oeillet.

Ces oeillets disposés parallèlement au sens de déplacement de la bande transporteuse sont maintenus à l'écartement requis par un ou plusieurs fils transversaux sur lesquels ces oeillets sont soudés.

Une tige traverse les boucles de deux modules disposés l'un derrière l'autre suivant le sens de déplacement de la bande transporteuse pour ainsi réaliser une articulation.

Parfois la largeur de la bande transporteuse est obtenue également par juxtaposition de modules.

Sur les rives de ces modules, sont rapportées des plaquettes métalliques pourvues chacune de deux perçages permettant de les engager sur les tiges sur lesquelles s'articulent les boucles des oeillets.

Les bords inférieurs longitudinaux de ces plaquettes constituent les surfaces portantes de la bande transporteuse et ces surfaces portantes s'appuient sur une surface de glissement.

Ces plaquettes métalliques ont une hauteur variable.

Elles peuvent avoir une hauteur inférieure à celle des oeillets mais plus généralement, elles auront une hauteur supérieure à celle des dits oeillets.

L'assemblage de ces divers éléments constitue une part non négligeable du coût de revient de ces bandes transporteuses (NL-1005979).

L'invention se propose notamment d'optimiser cet assemblage.

A cet effet, l'invention a pour objet un module pour la réalisation, par assemblage de modules, d'une bande transporteuse comprenant :
- une pluralité de fils métalliques, appelés oeillets, pourvus à chaque extrémité d'une boucle, ces oeillets étant, d'une part, disposés parallèlement au sens de déplacement de la bande transporteuse et, d'autre part, maintenus à l'écartement requis par un ou plusieurs fils transversaux sur lesquels ces oeillets sont soudés et
- notamment mais non exclusivement, sur les rives de ces modules, des plaquettes métalliques pourvues chacune de deux perçages alignés avec les boucles des oeillets et au travers desquelles sont engagées les tiges qui servent d'axe d'articulation entre les modules,
ce module étant caractérisée en ce qu'avant assemblage des modules au moyen des axes d'articulation, les plaquettes sont, par un moyen de fixation, rigidement fixées, en leur position requise sur au moins un fil transversal.

L'invention a également pour objet la bande transporteuse obtenue.

L'invention sera bien comprise à l'aide de la description ci-après faite, à titre d'exemple non limitatif, en regard du dessin ci-annexé qui représente schématiquement :

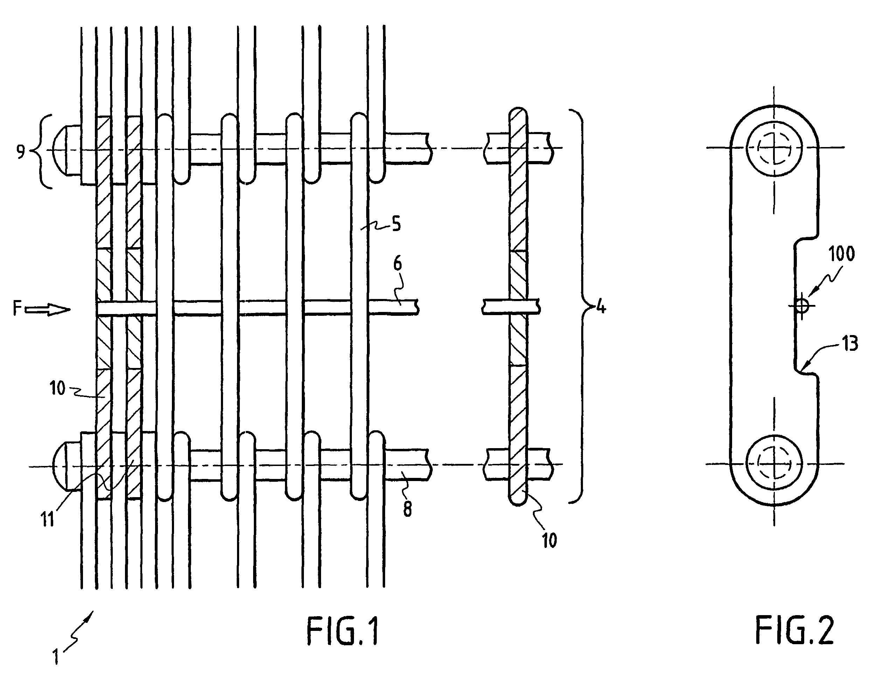

- figure 1 : une vue partielle du dessus d'une bande transporteuse,
- figure 2 : une vue selon F de la figure 1.

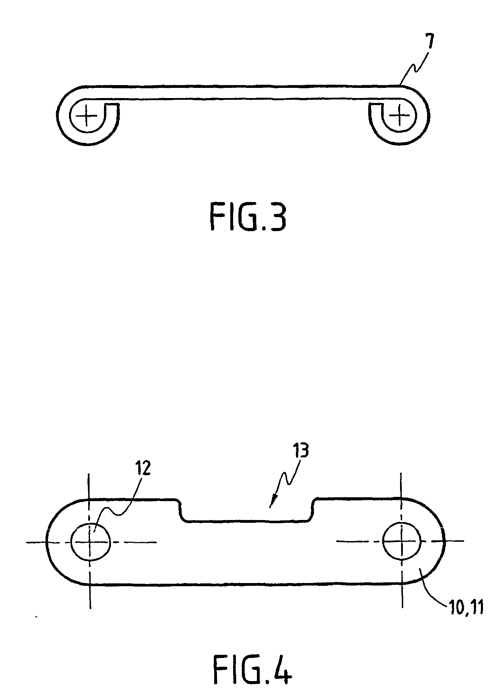

- figure 3 : une vue d'un oeillet
- figure 4 : une vue d'une plaquette.

En se reportant au dessin, on voit une bande 1 transporteuse formant une boucle et qui circule entre au moins deux organes de renvoi (non représentés).

De préférence, au moins l'un des organes de renvoi est un moyen d'entraînement de la bande transporteuse, tel des roues dentées.

Classiquement, la bande transporteuse comprend une pluralité de surfaces 4 portantes ou modules 4 constitués chacun par une pluralité de fils 5 métalliques ou oeillets 5.

Ces oeillets 5 sont pourvus à chaque extrémité d'une boucle 7, ces oeillets 5 étant, d'une part, disposés parallèlement au sens de déplacement de la bande transporteuse et, d'autre part, maintenus à l'écartement requis par un ou plusieurs fils 6 transversaux sur lesquels ces oeillets sont soudés.

Les fils transversaux sont soudés sous les oeillets, c'est à dire sur une partie de l'oeillet qui n'est pas la surface portante du convoyeur.

Notamment mais non exclusivement, sur les rives de ces modules 4, des plaquettes 10 métalliques pourvues chacune de deux perçages 12 alignés avec les boucles 7 des oeillets, au travers desquels boucles et perçages sont engagées les tiges 8 qui servent d'axe 8 d'articulation entre les modules 4 de sorte à réaliser une articulation 9.

Ces plaquettes servent à reprendre les efforts et également à servir d'appui des tapis.

Des plaquettes peuvent équiper les rives mais également se localiser entre deux rives.

Les oeillets sont obtenus par pliage d'un fil.

Selon une caractéristique de l'invention, avant assemblage des modules 4 au moyen des axes d'articulation, les plaquettes sont, par un moyen de fixation, rigidement fixées, en leur position requise sur au moins un fil transversal.

Ainsi en pré-assemblant les plaquettes avec les modules 4, on réduit le temps de montage des tiges 8 réunissant les modules 4 et on facilite le montage sur site de ces bandes transporteuses.

De préférence, chaque rive du module est équipée de deux jeux de plaquettes.

Sur un axe d'articulation commun à deux modules, sont ainsi montées quatre plaquettes qui s'alternent.

Cela permet d'améliorer la stabilité du convoyeur en appui, par l'intermédiaire de ces plaquettes, sur des surfaces de glissement.

Ce montage permet également de limiter le tassement des différents éléments.

En effet, la distance entre les plaquettes situées de part et d'autre du module sera constante en raison de la fixation de ces plaquettes sur les fils transversaux.

Par ailleurs, le montage de ces plaquettes peut être automatisé.

A cet effet, chaque plaquette est pourvue sur l'un de ces champs d'au moins une encoche 13 ou de plusieurs encoches permettant de placer le ou les fils transversaux dans l'encoche par un déplacement du ou des fils transversaux parallèlement au plan P de la plaquette.

De préférence, la largeur de l'encoche sera supérieure à celle nécessaire pour y placer le ou les fils transversaux.

Cela permet d'utiliser une même plaquette pour des modules présentant un ou plusieurs fils transversaux.

Egalement, cela permet d'avoir des tolérances dimensionnelles plus intéressantes.

L'encoche est orientée vers le haut de la bande transporteuse.

La base de la plaquette se situe à un niveau inférieure au plan dans lequel s'étend la base des oeillets de sorte que seules les plaquettes sont en contact avec les guides.

La fixation du ou des fils sur la plaquette se fait, de préférence, par fusion locale de matériau, telle une soudure.

Ainsi pour l'assemblage des éléments unitaires, il suffira simplement de positionner les éléments unitaires sur une table de montage et d'enfiler les tiges.

Dans une variante de réalisation, au moins certains des oeillets constituant le module sont des plaquettes du type précité présentant des perçages 12 et des encoches 13.

Le module peut être constitué exclusivement de plaquettes.

Soit la largeur des modules correspond à la largeur de la bande transporteuse, soit la largeur des modules est un sous-multiple de la largeur de la bande transporteuse.

La largeur des modules est donc inférieure ou égale à la largeur de la bande transporteuse.

## Revendications

1. Module pour la réalisation, par assemblage de modules, d'une bande transporteuse comprenant :
- une pluralité de fils (5) métalliques, appelés oeillets (5), pourvus à chaque extrémité d'une boucle (7), ces oeillets (5) étant, d'une part, disposés parallèlement au sens de déplacement de la bande transporteuse et, d'autre part, maintenus à l'écartement requis par un ou plusieurs fils (6) transversaux sur lesquels ces oeillets (5) sont soudés et
- notamment mais non exclusivement, sur les rives de ces modules (4), des plaquettes (10) métalliques pourvues chacune de deux perçages (12) alignés avec les boucles (7) des oeillets (5) et au travers desquels boucles et perçages sont engagées les tiges qui servent d'axe d'articulation entre les modules,
ce module étant **CARACTERISE en ce que**, avant assemblage des modules (4) au moyen des axes (8) d'articulation, les plaquettes (10) sont, par un moyen (100) de fixation, rigidement fixées, en leur position requise, sur au moins un fil (6) transversal.

2. Module selon la revendication 1 **caractérisé en ce que** chaque plaquette est pourvue sur l'un de ces champs d'au moins une encoche (13) permettant de placer le fil transversal dans l'encoche.

3. Module selon la revendication 1 **caractérisé en ce que** chaque plaquette est pourvue sur l'un de ces champs de plusieurs encoches (13) permettant de placer le fil transversal dans les encoches.

4. Module selon la revendication 2 **caractérisé en ce que** la largeur de l'encoche (13) est supérieure à celle nécessaire pour y placer un fil transversal.

5. Module selon la revendication 1 **caractérisé en ce qu'**au moins certains des oeillets (5) constituant le module (4) sont des plaquettes (10) présentant des perçages (12) et des encoches (13).

6. Module selon la revendication 1 **caractérisé en ce que** tous les oeillets sont des plaquettes.

7. Bande transporteuse obtenue par assemblage de modèles **caractérisée en ce qu'**elle comprend au moins un module selon l'une quelconque des revendications 1 à 6.

8. Bande transporteuse selon la revendication 7 **caractérisée en ce que** la largeur du module est inférieure ou égale à la largeur de la bande transporteuse.

## Claims

1. Module for producing a conveyor belt, by assembling modules together, comprising;
- a number of metal wires (5), called eyelets (5), provided at each end with a loop (7), these eyelets (5) being, on the one hand, arranged parallel with the direction of movement of the conveyor belt and, on the other hand, kept away at the required distance by one or more transverse wires (6) to which these eyelets (5) are welded and
- in particular, but not exclusively, on the edges of these modules (4), metal plates (10) each provided with two drillings (12) aligned with the loops (7) of the eyelets (5) and through these loops and drillings rods are engaged which act as articulation axes between the modules,
this module being **characterised in that**, before the modules (4) are assembled by means of the articulation rods (8), the plates (10) are rigidly fixed in their required position by a fastener (100), to at least one transverse wire (6).

2. Module according to Claim 1 **characterised in that** each plate is provided on one of these fields with at least one notch (13) enabling the transverse wire to be fitted into the notch.

3. Module according to Claim 1 **characterised in that** each plate is provided on one of these fields with several notches (13) enabling the transverse wire to be fitted into the notches.

4. Module according to Claim 2 **characterised in that** the width of the notch (13) is greater than the width necessary for fitting a transverse wire in it.

5. Module according to Claim 1 **characterised in that** at least some of the eyelets (5) which make up the module (4) are plates (10) which have drillings (12) and notches (13).

6. Module according to Claim 1 **characterised in that** all the eyelets are plates.

7. Conveyor belt produced by assembling modules together, **characterised in that** it includes at least one module according to any one of the Claims I to 6.

8. Conveyor belt according to Claim 7 **characterised in that** the width of the module is less than or equal to the width of the conveyor belt.

## Patentansprüche

1. Modul zur Herstellung eines Transport- bzw. Förderbandes durch Zusammenfügen von Modulen, der umfasst:
- eine Vielzahl von Metalldrähten (5), hier als Bügel (5) bezeichnet, die an jedem Ende mit einer Öse (7) ausgestattet sind, wobei diese Bügel (5) einerseits parallel zur Laufrichtung des Transport- bzw. Förderbandes angeordnet sind und andererseits durch einen oder mehrere Querdrähte (6), auf welche diese Bügel (5) aufgeschweißt sind, im Abstand voneinander gehalten werden, und
- insbesondere, jedoch nicht ausschließlich, auf den Banketten bzw. Randstreifen dieser Module (4), Metall-Plättchen (10), die jeweils mit zwei Bohrungen (12) versehen sind, die auf die Ösen (7) der Bügel (5) ausgerichtet sind, wobei durch die Ösen und Bohrungen hindurch Stangen eingeführt sind, die als Dreh- bzw. Gelenkachse zwischen den Modulen fungieren,
wobei dieser Modul **dadurch gekennzeichnet ist, dass** vor dem Zusammenfügen der Module (4) mittels Gelenk- bzw. Drehachsen (8) die Plättchen (10) mittels einer Fixiereinrichtung (100) in der erforderlichen Position auf mindestens einem Querdraht (6) starr fixiert sind.

2. Modul nach Anspruch 1, **dadurch gekennzeichnet, dass** jedes Plättchen auf einem dieser Felder mit einer Aussparung (13) ausgestattet ist, in welcher der Querdraht angeordnet sein kann.

3. Modul nach Anspruch 1, **dadurch gekennzeichnet, dass** jedes Plättchen auf einem dieser Felder mit mehreren Aussparungen (13) ausgestattet ist, in denen der Querdraht angeordnet sein kann.

4. Modul nach Anspruch 2, **dadurch gekennzeichnet, dass** die Breite der Aussparung (13) größer als erforderlich ist, um darin einen Querdraht anzuordnen.

5. Modul nach Anspruch 1, **dadurch gekennzeichnet, dass** mindestens bestimmte der Bügel (5), die den Modul (4) aufbauen, Plättchen (10) sind, die Bohrungen (12) und Aussparungen (13) aufweisen.

6. Modul nach Anspruch 1, **dadurch gekennzeichnet, dass** alle Bügel Plättchen sind.

7. Transport- bzw. Förderband, das durch Zusammenfügen von Modulen hergestellt ist, **dadurch gekennzeichnet, dass** es mindestens einen Modul nach einem der Ansprüche 1 bis 6 umfasst.

8. Transport- bzw. Förderband nach Anspruch 7, **dadurch gekennzeichnet, dass** die Breite des Moduls geringer ist oder gleich ist der Breite des Transport- bzw. Förderbandes.
